(19) Europäisches Patentamt
European Patent Office
Office européen des brevets

(11) EP 3 841 155 B1

(12) # EUROPEAN PATENT SPECIFICATION

(45) Date of publication and mention of the grant of the patent:
**29.03.2023 Bulletin 2023/13**

(21) Application number: **19752584.3**

(22) Date of filing: **03.07.2019**

(51) International Patent Classification (IPC):
***C08G 77/08*** (2006.01) ***C08G 77/10*** (2006.01)
***C08G 77/16*** (2006.01) ***C08L 83/04*** (2006.01)

(52) Cooperative Patent Classification (CPC):
**C08G 77/08; C08G 77/10; C08G 77/16; C08L 83/04**

(86) International application number:
**PCT/US2019/040442**

(87) International publication number:
**WO 2020/040886 (27.02.2020 Gazette 2020/09)**

(54) **METHOD FOR CONDENSATION POPLYMERIZATION OF HYDROXYL-TERMINATED POLYDIORGANOSILOXANES**

VERFAHREN ZUR KONDENSATIONSPOLYMERISATION VON HYDROXYLTERMINIERTEN POLYDIORGANOSILOXANEN

PROCÉDÉ DE POLYMÉRISATION PAR CONDENSATION DE POLYDIORGANOSILOXANES À TERMINAISON HYDROXYLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2018 US 201862722649 P**
**13.11.2018 US 201862760080 P**

(43) Date of publication of application:
**30.06.2021 Bulletin 2021/26**

(73) Proprietors:
- **Dow Silicones Corporation**
  **Midland, MI 48686-0994 (US)**
- **Dow Global Technologies LLC**
  **Midland, MI 48674 (US)**

(72) Inventors:
- **ROBERT, John**
  **Midland, MI 48642 (US)**
- **BELOWICH, Matthew**
  **Midland, MI 48674 (US)**
- **PETERSON, Thomas**
  **Midland, MI 48674 (US)**
- **PUSHKAREV, Vladimir**
  **Midland, MI 48642 (US)**
- **AUYEUNG, Evelyn**
  **Lake Jackson, TX 77566 (US)**
- **RICKARD, Mark**
  **Midland, MI 48667 (US)**

(74) Representative: **Murgitroyd & Company**
**Murgitroyd House**
**165-169 Scotland Street**
**Glasgow G5 8PL (GB)**

(56) References cited:
**EP-A1- 0 909 778** **EP-B1- 2 155 804**
**US-A- 4 525 470**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 841 155 B1

## Description

TECHNICAL FIELD

This invention relates to a method for condensation polymerization of hydroxyl-terminated polydiorganosiloxanes. The method employs a catalyst that minimizes production of cyclic polydiorganosiloxane by-products.

BACKGROUND

Hydroxyl functional organosiloxane oligomers and short chain polymers may be polymerized via condensation reaction to high molecular weight, high degree of polymerization polymers by polymerization in the presence of a suitable condensation reaction catalyst. Condensation polymerization of hydroxyl functional organosiloxanes occurs with the elimination of water as a by-product. Previous methods employed Bronsted acids, Bronsted bases, or phosphonitriles as catalysts. Although these catalysts can be highly active (to produce product with high DP), they tend to produce large quantities (>1000 ppm) of the cyclic by-product, octamethylcyclotetrasiloxane (D4), in the resulting hydroxyl-functional polydiorganosiloxane product.

EP2155804 B1 discloses a method of making increased molecular weight phenylalkylsiloxanes via the polymerization of shorter-chain phenylalkylsiloxanes under vacuum in an aqueous alkaline solution comprising a hydroxide of sodium, potassium, magnesium, calcium, rubidium, (substituted) ammonium or phosphonium.

PROBLEM TO BE SOLVED

There is an industry need to produce high molecular weight, high degree of polymerization polyorganosiloxanes with lower D4 content than achieved with previous methods, described above.

SUMMARY

A method for polymerizing polydiorganosiloxanes comprises:

1) heating, at a temperature of 50°C to 200°C, a reaction mixture prepared by mixing starting materials comprising

   A) a polydiorganosiloxane of unit formula $[(HO)R_2SiO_{1/2}]_2(R_2SiO_{2/2})_n$, where subscript n is 0 to 2000, and each R is an independently selected monovalent hydrocarbon group of 1 to 18 carbon atoms; and
   B) a catalyst, at a concentration of 0.001 to 0.01 mol/L based on amount of starting material A), where the catalyst comprises

      B1) a salt - anion complex selected from the group consisting of

         B1i) a quaternary ammonium - fluorinated carboxylate complex,
         B1ii) a quaternary ammonium - sulfonate complex,
         B1iii) a quaternary phosphonium - fluorinated carboxylate complex,
         B1iv) a quaternary phosphonium - sulfonate complex,
         B1v) an imidazolium - fluorinated carboxylate complex, and
         B1vi) an imidazolium - sulfonate complex;

      B2) an acid selected from the group consisting of a fluorinated carboxylic acid and a sulfonic acid; thereby preparing a reaction mixture; where B2) is used in an amount of 1.5 moles to 10 moles per mole of starting material B1); and

2) recovering a product from the reaction mixture, where the product has unit formula $[(HO)R_2SiO_{1/2}]_2(R_2SiO_{2/2})_m$, where m > n.

DETAILED DESCRIPTION

The method described above may be performed using a batch reactor or a continuous reactor, such as a gas liquid reactor. Residence time depends on various factors including the temperature selected and the type of reactor. However, step 1) may be performed by heating at a temperature of 50°C to 200°C, alternatively 50°C to 150°C, alternatively 90°C to 130°C, and alternatively 110°C for at least 30 seconds, alternatively for 30 seconds to 2 hours. The

method may be performed at ambient pressure and does not require an inert atmosphere. However, conditions that enable by-product water to be removed may facilitate increasing DP of the product or improving selectivity (minimizing D4 in the product), or both. Therefore, the method may further comprise removing water during and/or after step 1). Step 2) may be performed by a method comprising filtering, stripping and/or distilling the reaction mixture.

The method described above can produce a hydroxyl-terminated polydiorganosiloxane having a DP higher than that of starting material A) and a relatively low D4 content (i.e., D4 content lower than that produced using a phosphonitrilic catalyst). For example, D4 content in the product may be < 800 ppm, alternatively < 500 ppm, alternatively < 400 ppm, and alternatively < 350 ppm, and alternatively < 300 ppm. The minimum amount of D4 may be 0, alternatively 100 ppm. And, when starting material A) has a DP < 50, DP of the product may be > 200, alternatively > 400, alternatively > 500, alternatively > 700, alternatively > 800, and alternatively > 1000. Alternatively, when starting material A) has a DP < 50, DP of the product may be 100 to 1100, alternatively 400 to 1100, alternatively 500 to 1100.

Starting Material A) Polydiorganosiloxane

In the method described above, starting material A) is a polydiorganosiloxane comprising unit formula A-1): $[(HO)R_2SiO_{1/2}]_2(R_2SiO_{2/2})_n$.

In unit formula A-1), R is an independently selected monovalent hydrocarbon group of 1 to 18 carbon atoms. Suitable monovalent hydrocarbon groups for R may be selected from the group consisting of alkyl, alkenyl, and aryl. Exemplary alkyl groups include methyl, ethyl, propyl (including n-propyl and iso-propyl), butyl (including n-butyl, t-butyl, iso-butyl and sec-butyl), and hexyl groups (including branched and linear isomers thereof). Exemplary alkenyl groups include vinyl, allyl, and hexenyl (including branched and linear isomers thereof). Exemplary aryl groups include phenyl, tolyl, xylyl, naphthyl, and benzyl. Alternatively, each alkyl may be methyl, each alkenyl may be selected from the group consisting of vinyl, allyl, and hexenyl, and each aryl may be phenyl. Alternatively, 50% to 100%, alternatively 80% to 100%, and alternatively 90% to 100% of all instances of R are alkyl groups such as methyl. Alternatively, the R groups on starting material A) may be methyl and phenyl. Alternatively, the R groups on starting material A) may be methyl and vinyl.

In unit formula A-1), subscript n is 0 to 2000. Alternatively, subscript n may be 5 to 2000, alternatively 5 to 200, alternatively 10 to 150, alternatively 15 to 100, alternatively 20 to 50, and alternatively 25 to 35.

One skilled in the art would recognize that starting material A) may be substantially linear, alternatively starting material A) is linear. Furthermore, starting material A) may contain a small number of additional siloxane units, such as those of formula $(HORSiO_{2/2})$, $(RSiO_{3/2})$ and/or $(SiO_{4/2})$ provided that starting material A) is substantially linear. Examples of starting material A) include bis-hydroxyl terminated polydimethylsiloxane. Suitable polydiorganosiloxanes for starting material (A) may be prepared by methods known in the art such as the addition of diorganodichlorosilanes to a water/solvent mixture to yield a mixture of low molecular weight hydroxyl end-blocked polydiorganosiloxanes and cyclic siloxanes in solvent. The mixture may be purified to separate hydroxyl end-blocked polydiorganosiloxanes and cyclic polysiloxanes.

Starting Material B) Catalyst

Starting material B) is the catalyst used in the method described above. Starting material B) comprises: B1) a salt - anion complex and B2) an acid. The salt - anion complex is selected from the group consisting of: B1i) a quaternary ammonium - fluorinated carboxylate complex, B1ii) a quaternary ammonium - sulfonate complex, B1iii) a quaternary phosphonium - fluorinated carboxylate complex, B1iv) a quaternary phosphonium - sulfonate complex, B1v) an imidazolium - fluorinated carboxylate complex, and B1vi) an imidazolium - sulfonate complex.

Starting material B1i) is a quaternary ammonium - fluorinated carboxylate complex, such as a tetra alkyl ammonium - fluoroalkyl carboxylate complex. The quaternary ammonium cation in this complex may be tetramethyl ammonium, tetraethyl ammonium, tetra butyl ammonium, such as tetra-n-butyl ammonium. The fluorinated carboxylate anion in this complex may have formula

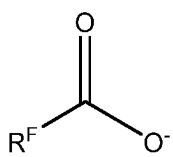
,

where $R^F$ is a fluoroalkyl group of 1 to 10 carbon atoms, alternatively 1 to 6 carbon atoms, alternatively 1 to 4 carbon atoms, and alternatively 1 to 2 carbon atoms. Examples of fluoroalkyl groups for $R^F$ include trifluoromethyl or 3,3,3-trifluoropropyl, alternatively trifluoromethyl. Quaternary ammonium - fluorinated carboxylate complexes are commercially available from Sigma-Aldrich.

Starting material B1ii) is a quaternary ammonium - sulfonate complex, such as a tetra alkyl ammonium - alkyl sulfonate complex. The quaternary ammonium cation in this complex may be tetramethyl ammonium, tetraethyl ammonium, tetra butyl ammonium, such as tetra-n-butyl ammonium. The sulfonate anion in this complex may have formula

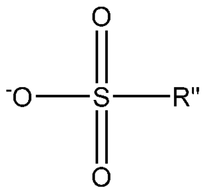

,

where R" is an alkyl group of 1 to 10 carbon atoms, alternatively 1 to 6 carbon atoms, alternatively 1 to 4 carbon atoms. Suitable alkyl groups for R" are exemplified by methyl, ethyl, or propyl; alternatively methyl. Quaternary ammonium - sulfonate complexes are commercially available from Sigma-Aldrich.

Starting material B1iii) is a quaternary phosphonium - fluorinated carboxylate complex, such as a tetra alkyl phosphonium - fluoroalkyl carboxylate complex. The quaternary phosphonium cation in this complex may be tetramethyl phosphonium, tetraethyl phosphonium, tetra butyl phosphonium, such as tetra-n-butyl phosphonium. The fluorinated carboxylate anion in this complex may have formula

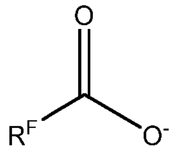

,

where $R^F$ is a fluoroalkyl group of 1 to 10 carbon atoms, alternatively 1 to 6 carbon atoms, alternatively 1 to 4 carbon atoms, and alternatively 1 to 2 carbon atoms. Examples of fluoroalkyl groups for $R^F$ include trifluoromethyl or 3,3,3-trifluoropropyl, alternatively trifluoromethyl. Quaternary phosphonium -fluorinated carboxylate complexes may be prepared by methods known in the art, such as that disclosed in Rountree, E. S.; Dempsey, J. L. Inorg. Chem. 2016, 55, 5079.

Starting material B1iv) is a quaternary phosphonium - sulfonate complex, such as a tetra alkyl phosphonium - alkyl sulfonate complex. The quaternary phosphonium cation in this complex may be tetramethyl phosphonium, tetraethyl phosphonium, tetra butyl phosphonium, such as tetra-n-butyl phosphonium. The sulfonate anion in this complex may have formula

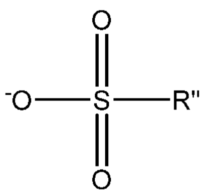

,

where R" is an alkyl group of 1 to 10 carbon atoms, alternatively 1 to 6 carbon atoms, alternatively 1 to 4 carbon atoms. Suitable alkyl groups for R" are exemplified by methyl, ethyl, or propyl; alternatively methyl. Quaternary phosphonium - sulfonate complexes are commercially available from Sigma - Aldrich.

Starting material B1v) is an imidazolium - fluorinated carboxylate complex, such as an alkyl imidazolium - fluoroalkyl carboxylate complex. The imidazolium anion in this complex may have formula

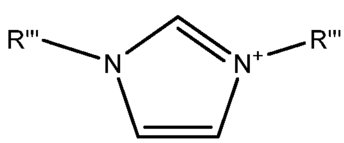

,

where each R‴ is an independently selected alkyl group of 1 to 10 carbon atoms, alternatively 1 to 6 carbon atoms, alternatively 1 to 4 carbon atoms and alternatively 1 to 2 carbon atoms. Alternatively, each R‴ may be methyl or ethyl. Alternatively, one of R‴ may be methyl and the other of R‴ may be ethyl. The fluorinated carboxylate anion in this complex may have formula

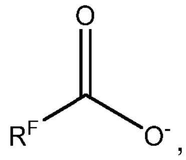

where $R^F$ is a fluoroalkyl group of 1 to 10 carbon atoms, alternatively 1 to 6 carbon atoms, alternatively 1 to 4 carbon atoms, and alternatively 1 to 2 carbon atoms. Examples of fluoroalkyl groups for $R^F$ include trifluoromethyl or 3,3,3-trifluoropropyl, alternatively trifluoromethyl. Imidazolium - fluorinated carboxylate complexes are commercially available from Sigma - Aldrich.

Starting material B1vi) is an imidazolium - sulfonate complex. The imidazolium anion in this complex may have formula

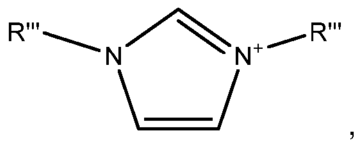

where each R‴ is an independently selected alkyl group of 1 to 10 carbon atoms, alternatively 1 to 6 carbon atoms, alternatively 1 to 4 carbon atoms and alternatively 1 to 2 carbon atoms. Alternatively, each R‴ may be methyl or ethyl. Alternatively, one of R‴ may be methyl and the other of R‴ may be ethyl. The sulfonate anion in this complex may have formula

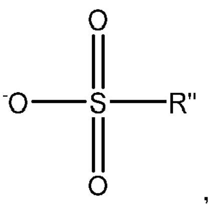

where R" is an alkyl group of 1 to 10 carbon atoms, alternatively 1 to 6 carbon atoms, alternatively 1 to 4 carbon atoms. Suitable alkyl groups for R" are exemplified by methyl, ethyl, or propyl; alternatively methyl. Imidazolium - sulfonate complexes are commercially available from Sigma - Aldrich.

Starting material B1) is used in an amount effective to catalyze condensation polymerization of starting material A). The exact amount depends on various factors including the species selected for starting material B1) and the selection of starting material B2), however, starting material B1) may be used in an amount of 0.005 mol/L to 0.1 mol/L, based on the amount of starting material A). Without wishing to be bound by theory, it is thought that if the amount of starting material B1) is too low (e.g., 0.0001 mol/L or lower when residence time in a batch reactor is 2 hours or less), catalytic activity will be insufficient.

Starting material B2) the acid is selected from the group consisting of B2i) a fluorinated carboxylic acid and B2ii) a sulfonic acid. Suitable fluorinated carboxylic acids are exemplified by fluoroalkyl acetic acids such as trifluoroacetic acid; 3,3,3-trifluoropropionic acid; 3,3,3-trifluoro-2,2-dimethylpropionic acid; 3,3,3-trifluoro-2-(trifluoromethyl)propionic acid; 4,4,4-trifluorobutyric acid; and 2-methyl, 4,4,4-trifluorobutyric acid. Alternatively, the fluorinated carboxylic acid may be trifluoroacetic acid. Fluorinated carboxylic acids are commercially available, e.g., from Sigma Aldrich.

Alternatively, starting material B2) may comprise a sulfonic acid, such as an alkyl sulfonic acid, *e.g.*, methane sulfonic acid, ethane sulfonic acid, 1-propane sulfonic acid, and t-butyl sulfonic acid. Alternatively, the sulfonic acid for B2) may comprise methane sulfonic acid. Sulfonic acids are commercially available, *e.g.*, from Sigma Aldrich.

The amount of starting material B2) depends on various factors including the selection and amount of starting material B1), however, the amount of starting material B2) is 1.5 moles to 10 moles, alternatively 1.5 moles to 2 moles, per mole of starting material B1).

Table 1 - Salt - Anion Complex & Acid Examples

| Number | Catalyst |
|---|---|
| 1 | 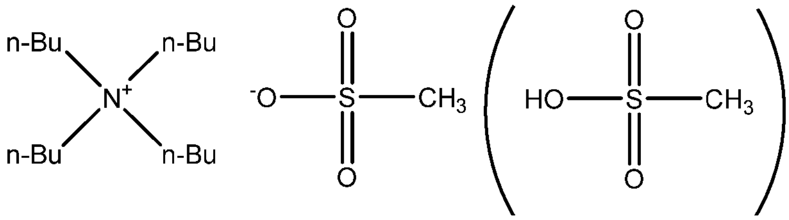 |
| 2 | 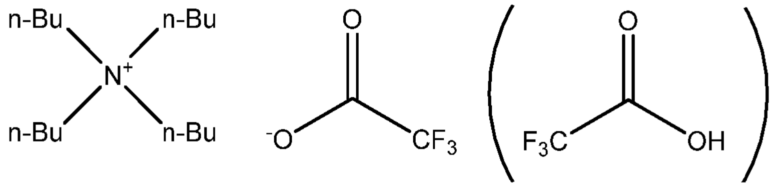 |
| 3 | 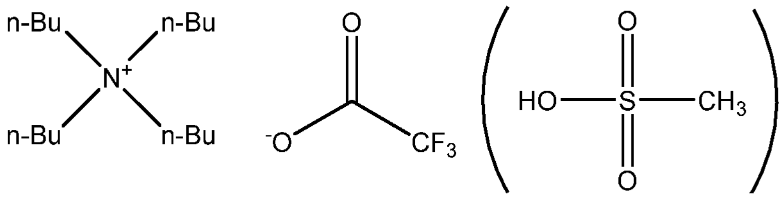 |
| 4 | 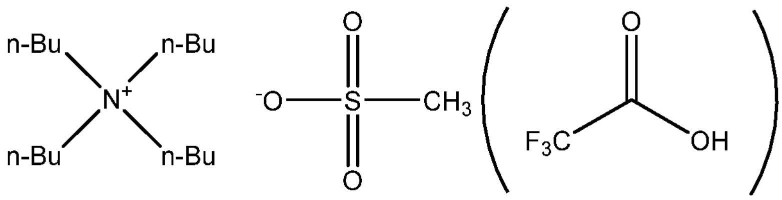 |
| 5 | 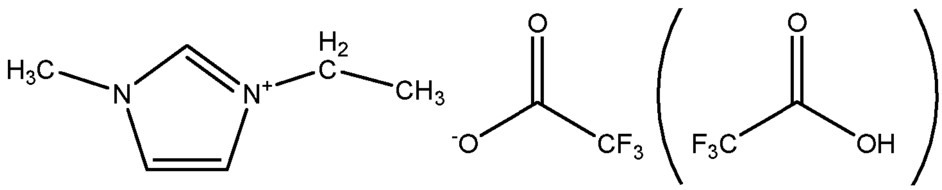 |
| 6 | 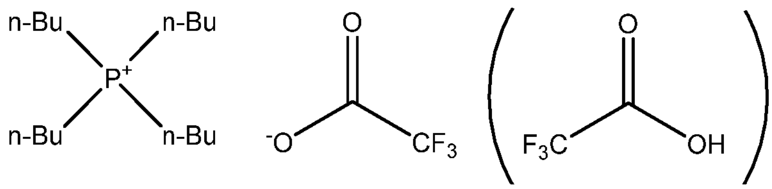 |
| 12 | 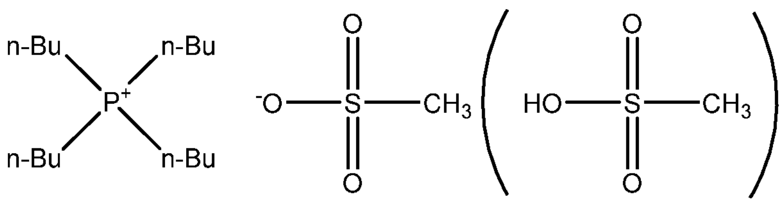 |

(continued)

| Number | Catalyst |
|---|---|
| P1 | 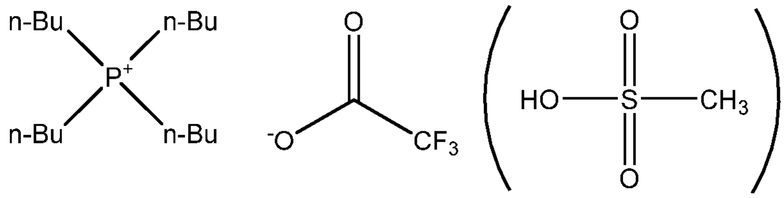 |
| P2 | 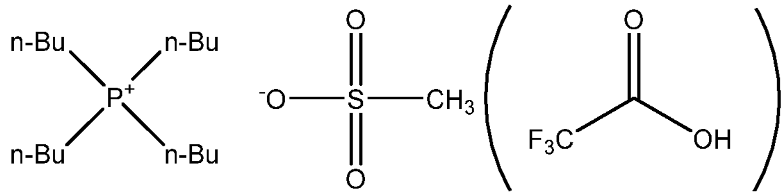 |
| 11 | 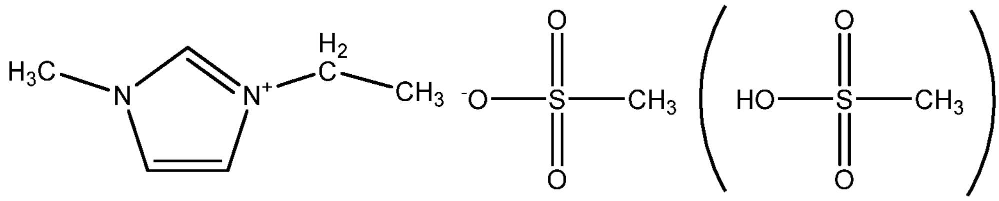 |
| P3 | 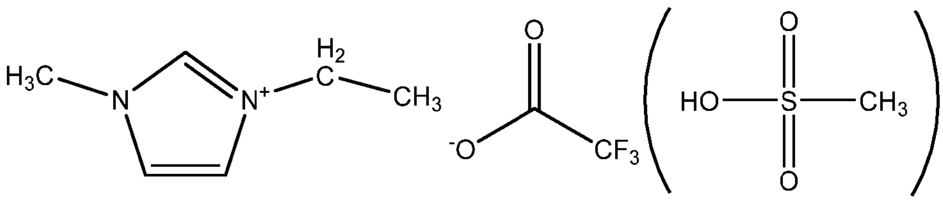 |
| P4 | 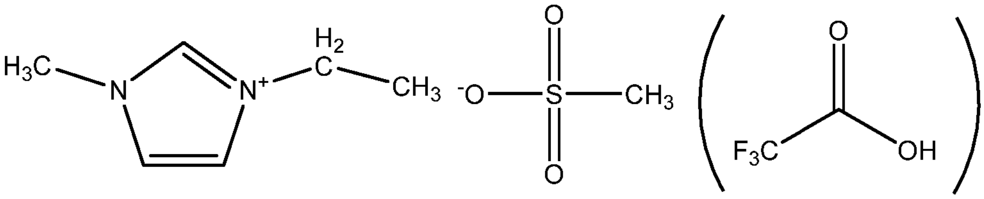 |

Starting Material C) Solvent

Starting material C), a solvent, may optionally be used in the method described herein. The solvent may be used to deliver one or more of the other starting materials. For example, starting material B1), starting material B2), or both may be dissolved in a solvent before combining with starting material A). The solvent may be an aprotic solvent, such as tetrahydrofuran, toluene, or dichloromethane. Alternatively, the solvent may be a low molecular weight trimethylsiloxy-terminated polydimethylsiloxane, such as an OS Fluid, which is commercially available from Dow Silicones Corporation of Midland, Michigan, U.S.A. The solvent may be used to deliver one or more starting materials (i.e., one or more starting materials may be dissolved in solvent before step 1), the reaction may proceed in solvent, or both. The amount of solvent depends on various factors including the type and amount of starting materials A) and B) selected and whether one or more starting materials is being delivered in a solvent, or whether the reaction will proceed in a solvent. For example, when present, the amount may be sufficient to form a reaction mixture with a concentration of starting material A) of 0.1 M - 0.5 M.

Product

The product of the method described herein is a bis-hydroxyl terminated polydiorganosiloxane of unit formula $[(HO)R_2SiO_{1/2}]_2(R_2SiO_{2/2})_m$, where R is as described above for starting material A), and subscript m has a value greater

than subscript n in starting material A). For example, in the product described above, subscript m may have a value ranging from (n + 100) to (n + 600), alternatively (n + 100) to (n + 800), alternatively (n + 100) to (n + 900), alternatively (n + 100) to (n + 1000), alternatively (n + 200) to (n + 1100).

EXAMPLES

These examples are intended to illustrate some embodiments of the invention and should not be interpreted as limiting the scope of the invention set forth in the claims. Compounds tested are shown in Table 2, below.

Table 2 -Compounds

| Number | Compound |
| --- | --- |
| 1 | 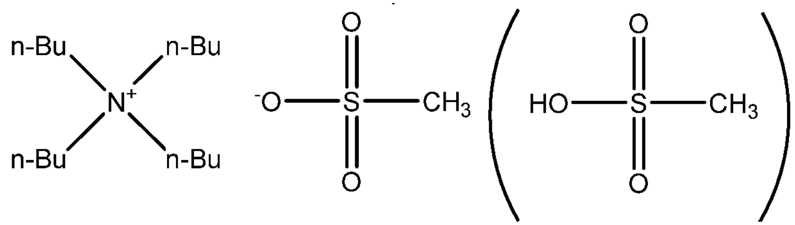 |
| 2 | 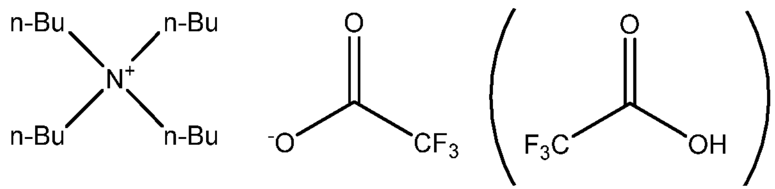 |
| 3 | 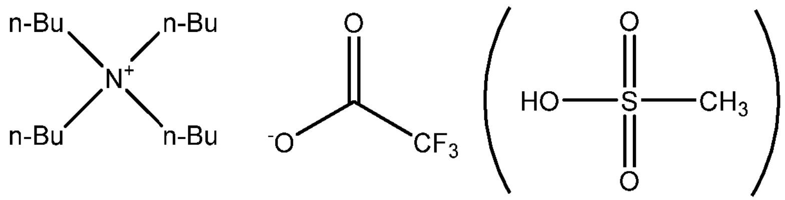 |
| 4 | 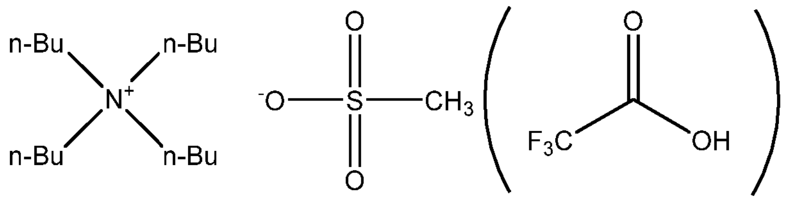 |
| 5 | 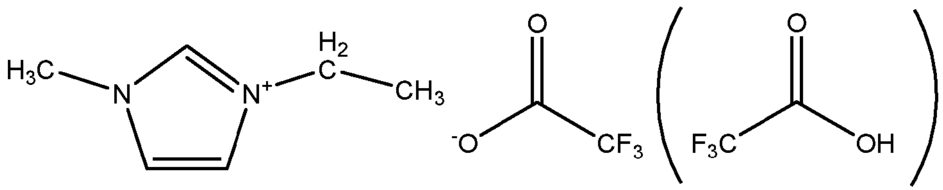 |

(continued)

| Number | Compound |
|---|---|
| 6 | 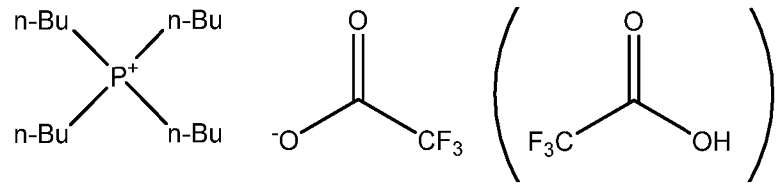 |
| Comparative 7 | 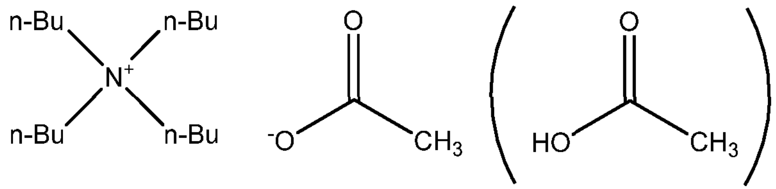 (not fluorinated) |
| Comparative 8 | 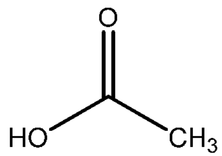 (no B1) |
| Comparative 9 | 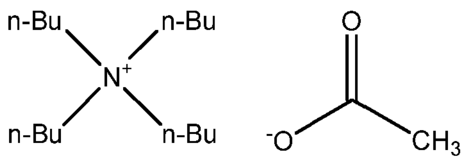 (no B2) |
| Comparative 10 | 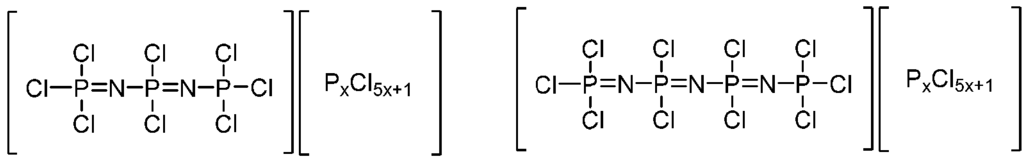 x = 0, 1 |

(continued)

| Number | Compound |
|---|---|
| 11 | 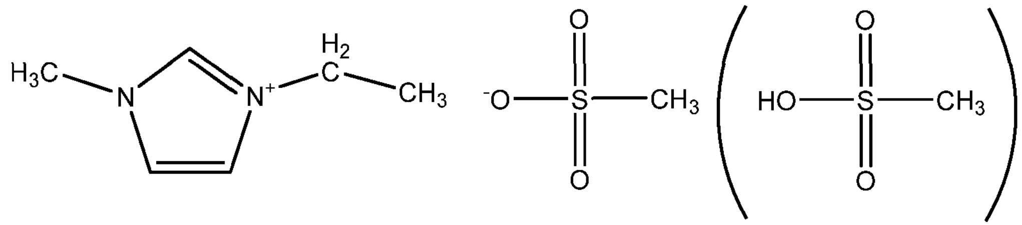 |
| 12 | 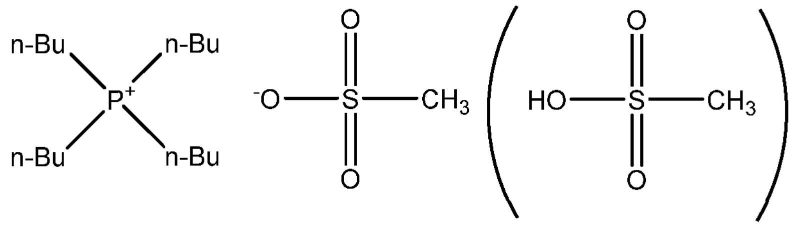 |
| Comparative 13 | 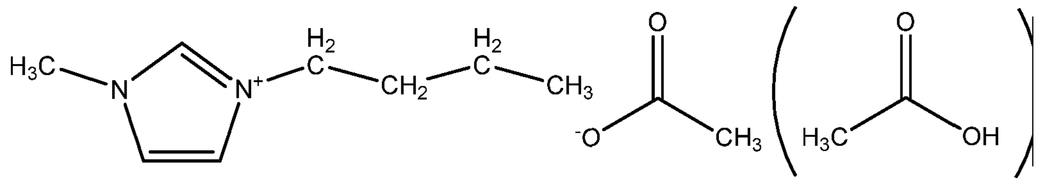 (not fluorinated) |
| Comparative 14 | 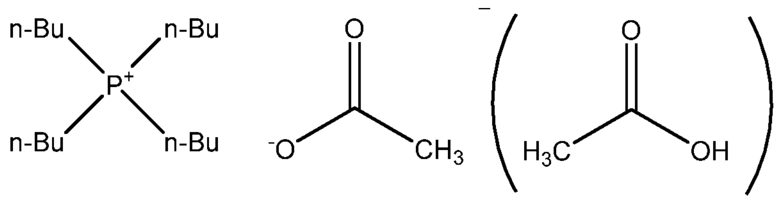 (not fluorinated) |

*Reference Example 1 - General Procedure*

Samples were prepared as follows. A 40 mL glass vial was filled with 5 g of bis-hydroxy terminated polydimethylsiloxane having an average DP of 35 and equipped with a stir bar. The bis-hydroxy terminated polydimethylsiloxane was obtained from Dow Silicones Corporation of Midland, MI, USA. The vial was placed on a heating block 110°C, and a compound at a loading (selection and amount in Table 1) was added to the bis-hydroxy terminated polydimethylsiloxane to initiate polymerization. The vial was capped after addition of the compound, and stirring was continued for 2 hr on the heating block at 110°C. After the 2 hr, the vials were removed from the heating block, and GPC samples were prepared. Analysis of the resulting crude reaction mixture by GPC indicated a final degree of polymerization, while headspace GC measured residual octamethylcyclotetrasiloxane. The compound tested, loading of the compound, Mn, Mw, and DP of the bis-hydroxy terminated polydimethylsiloxane prepared by the method, and residual D4 in the bis-hydroxy terminated polydimethylsiloxane prepared by the method are shown below in Table 3.

$$HOMe_2Si(OSiMe_2)_{35}OSiMe_2OH \xrightarrow[110°C,\ 2\ hr]{[Cat]} HOMe_2Si(OSiMe_2)_mOSiMe_2OH$$

Table 3

| Compound | Loading (M) | Mn | Mw | DP | PDI | Conversion (%) | D4 (ppm) | Example type |
|---|---|---|---|---|---|---|---|---|
| 1 | $1*10^{-3}$ | 54673 | 101794 | 732 | 1.9 | 95 | 769 | Inventive |
| 2 | $1*10^{-3}$ | 61178 | 115705 | 819 | 1.9 | 96 | 307 | Inventive |
| 3 | $1*10^{-3}$ | 32257 | 57313 | 432 | 1.8 | 92 | 225 | Inventive |
| 4 | $1*10^{-3}$ | 38685 | 66464 | 518 | 1.7 | 93 | 222 | Inventive |
| 5 | $1*10^{-3}$ | 19558 | 36178 | 262 | 1.8 | 87 | 142 | Inventive |
| 6 | $1*10^{-3}$ | 81223 | 155273 | 1088 | 1.9 | 97 | 231 | Inventive |
| 7 | $1*10^{-3}$ | 2634 | 4817 | 35 | 1.8 | 1 | 57 | Comparative |
| 8 | $1*10^{-2}$ | 2351 | 4231 | 31 | 1.8 | -11 | 29 | Comparative |
| 9 | $1*10^{-2}$ | 2141 | 4082 | 29 | 1.9 | -22 | 174 | Comparative |
| 10 | $1*10^{-5}$ | 38523 | 75672 | 516 | 2.0 | 93 | 3668 | Comparative |
| 11 | $1*10^{-3}$ | 27652 | 48088 | 370 | 1.7 | 91 | 367 | Inventive |
| 12 | $1*10^{-3}$ | 98204 | 178699 | 1315 | 1.8 | 97 | 930 | Inventive |
| 13 | $1*10^{-3}$ | 2973 | 6629 | 40 | 2.2 | 12 | 65 | Comparative |
| 14 | $1*10^{-3}$ | 3581 | 6987 | 48 | 2.0 | 27 | 59 | Comparative |

Comparative Example 10 showed that a conventional phosphonitrilic chloride catalyst produced high levels of D4 as a by-product of polymerization under the conditions tested. Comparative examples 7, 9, 13 and 14 and examples 2, 5 and 6 show that when a quaternary ammonium, imidazolium, or quaternary phosphonium -fluorinated carboxylate complex and a fluorinated carboxylic acid were used as the catalyst, dramatically improved polymerization (as shown by increase in DP and % conversion) were achieved, as compared to a catalyst including a quaternary ammonium - carboxylate (that was not fluorinated) complex under the conditions tested. Example 6 showed that good conversion, high DP and low D4 were achieved using a quaternary phosphonium - fluorinated carboxylate complex and a fluorinated carboxylic acid produced good conversion, high DP, and low D4 under the conditions tested. Example 5 showed that an imidazolium - fluorinated carboxylate complex and fluorinated carboxylic acid catalyzed polymerization as shown by an increase in DP with low D4 content under the conditions tested. Examples 11 and 12 showed that

*Reference Example 2 - Molecular distribution*

Molecular distribution of starting materials was analyzed by GPC equipped with triple detector array (Refractive Index, Right Angle Light Scattering, and Viscometer). 0.5% of samples were used for GPC analysis. Mw of Polystyrene standards were in the range of 580 to 100,000, and a $3^{rd}$ order calibration curve was used for molecular weight determination. Both samples and standards were diluted in HPLC grade ethyl acetate.

*Reference Example 3 - D4 Concentration*

D4 Concentration measurements were made using the following instruments, procedures, and quantitation methods.

*GC - HP 6890*

Gradient: 50 °C (1 min) - 220 °C @ 10 °C/min (no hold); Inlet: Split 1:20, 9.68 psi, 150 °C; Flow: 2 mL/min FID: Hydrogen 40 mL/min, Air 450 mL/min, Makeup 45 mL/min, Temperature 260 °C; Column: RTX-1, 30 m / 320 μm / 0.25 μm

*Headspace Unit - Perkin-Elmer TurboMatrix 40*

Incubation: 120 °C for 10 min with shaking; Syringe: 125 °C; Transfer Line: 130 °C; Pressurize: 3 min; Withdraw: 0.5 min; Column pressure: 20 psi; Injection: 0.15 min / 0.3 mL; GC cycle: 25 min

*Sample preparation*

Internal standards were prepared to be 0.01% dodecane by weight in Fisher Brand 19 fluid vacuum oil. 1 mL of internal standard solution was added to a 20 mL headspace vial (with Eppendorf repeater pipet). 100 mg of D4 standard (usually 100 ppm standard used) or 100 mg of experimental sample was added to the headspace vial.

*Quantitation:*

Quantitation of the D4 content was by the single point internal standard method. A relative response factor (RRF) of D4 relative to dodecane was established and updated every time a new batch of internal standard solution was prepared. The amount of D4 in the samples was determined within the Thermo Atlas data system according to an equation of the same type as the one below:

$$Conc_{D4} = \frac{RRF * Area_{D4}}{Area_{dodecane} * weight_{sample}}.$$

*Example 4*

The general procedure described above in reference example 1 is repeated, except using a quaternary phosphonium - sulfonate complex with a sulfonic acid as catalyst (shown as 12 in Table 1) as catalyst.

*Prophetic Example 5*

The general procedure described above in reference example 1 is repeated, except using a quaternary phosphonium - sulfonate complex with a fluorinated carboxylic acid (shown as P1 in Table 1) as catalyst.

*Example 6*

The general procedure described above in reference example 1 is repeated, except using an imidazolium - sulfonate complex with a sulfonic acid as catalyst (shown as 11 in Table 1) as catalyst.

*Prophetic Example 7*

The general procedure described above in reference example 1 is repeated, except using an imidazolium - sulfonate complex with a fluorinated carboxylic acid as catalyst (shown as P4 in Table 1) as catalyst.

Industrial Applicability

Bis-hydroxy terminated silicone polymers produced by Dow Silicones Corporation can contain approximately 1000 ppm D4 as a by-product. The inventors surprisingly found that several combinations of salt - anion complex and acid catalyze condensation of hydroxyl-terminated polydiorganosiloxanes and produce significantly less octamethylcyclotetrasiloxane than the other catalysts under the same conditions. These benefits were achievable in a method performed under ambient pressure, in the presence of oxygen (from air) and did not require solvent.

Definitions and Usage of Terms

All amounts, ratios, and percentages are by weight unless otherwise indicated. Table 5, below, defines abbreviations used throughout this application.

Table 5 - Abbreviations (1 psi = 6895 Pa).

| Abbreviation | Description |
|---|---|
| Bu | butyl |
| °C | degrees Celsius |
| D4 | octamethylcyclotetrasiloxane |
| DP | degree of polymerization |
| Et | ethyl |
| g | grams |
| GC | gas chromatography |
| GPC | gel permeation chromatography |
| hr | hours |
| HPLC | high performance liquid chromatography |
| M | molar |
| Me | methyl |
| min | minutes |
| mL | milliliter |
| Mn | number average molecular weight |
| Mw | weight average molecular weight |
| ppm | parts per million |
| THF | tetrahydrofuran |
| μL | microliters |

## Claims

**1.** A method for polymerizing polydiorganosiloxanes comprising:

1) heating, at a temperature of 50°C to 150°C, a reaction mixture prepared by mixing starting materials comprising

A) a polydiorganosiloxane of average unit formula [(HO)R2SiO1/2]2(R2SiO2/2)$_n$, where subscript n is 0 to 2000, and each R is an independently selected monovalent hydrocarbon group of 1 to 18 carbon atoms; and

B) a catalyst, at a concentration of 0.001 to 0.01 mol/L based on amount of starting material A), where the catalyst comprises

B1) a salt -anion complex selected from the group consisting of

B1i) a quaternary ammonium - fluorinated carboxylate complex,
B1ii) a quaternary ammonium - sulfonate complex,
B1iii) a quaternary phosphonium - fluorinated carboxylate complex,
B1iv) a quaternary phosphonium - sulfonate complex,
B1v) an imidazolium - fluorinated carboxylate complex, and
B1vi) an imidazolium - sulfonate complex;

B2) an acid selected from the group consisting of a fluorinated carboxylic acid and a sulfonic acid; thereby preparing a reaction mixture; where B2) is used in an amount of 1.5 moles to 10 moles per mole of starting material B1); and

2) recovering a product from the reaction mixture, where the product has unit formula $[(HO)R2SiO1/2]2(R2SiO2/2)_m$, where m > n.

**2.** The method of claim 1, where each R is independently selected from the group consisting of alkyl, alkenyl, and aryl.

**3.** The method of claim 1 or claim 2, where subscript n is 10 to 150.

**4.** The method of any one of claims 1 to 3, where the quaternary ammonium in starting material B1i) or B1ii) is tetra-n-butyl ammonium; the quaternary phosphonium in starting material B1iii) or B1iv) is tetra-n-butyl phosphonium; and the imidazolium in starting material B1v) or B1vi) is

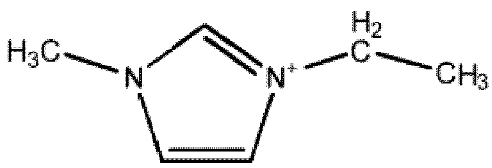

.

**5.** The method of any one of claims 1 to 4, where the fluorinated carboxylate is

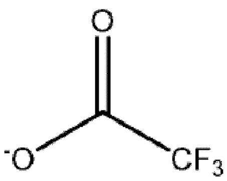

,

and the sulfonate is

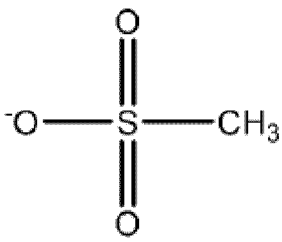

.

**6.** The method of any one of claims 1 to 5, where the fluorinated carboxylic acid for starting material B2) is

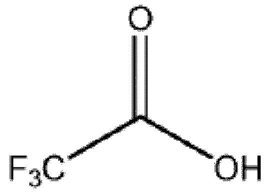
.

**7.** The method of any one of claims 1 to 5, where the sulfonic acid for starting material B2) is

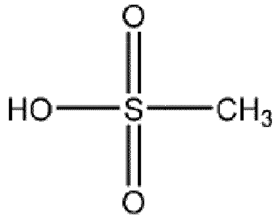
.

**8.** The method of any one of claims 1 to 3, where B) the catalyst is selected from the group consisting of:

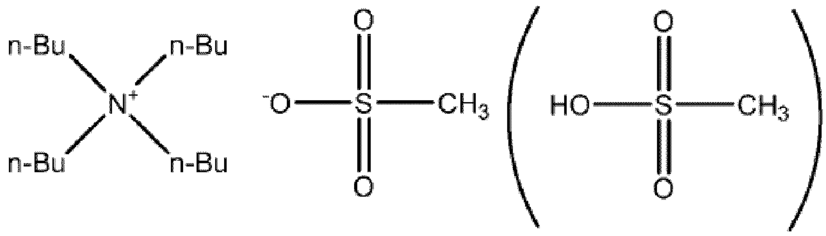
;

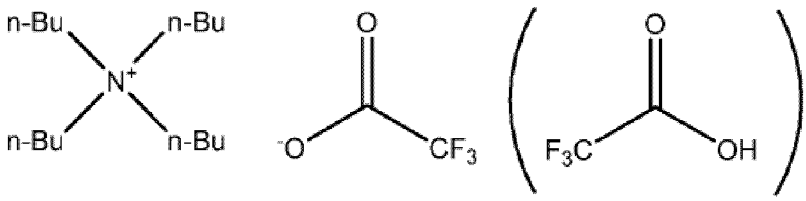
;

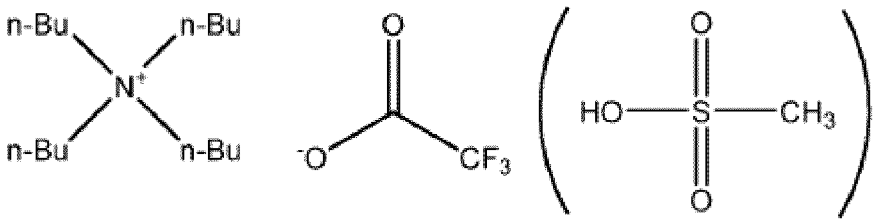
;

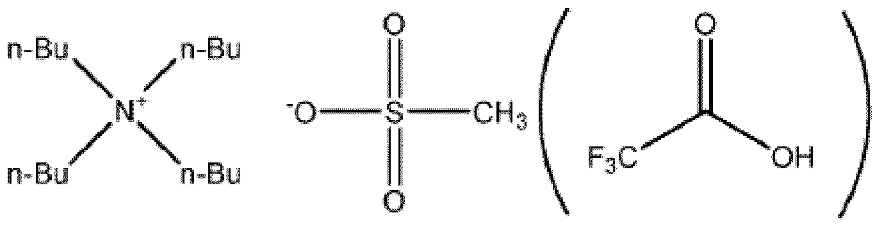
;

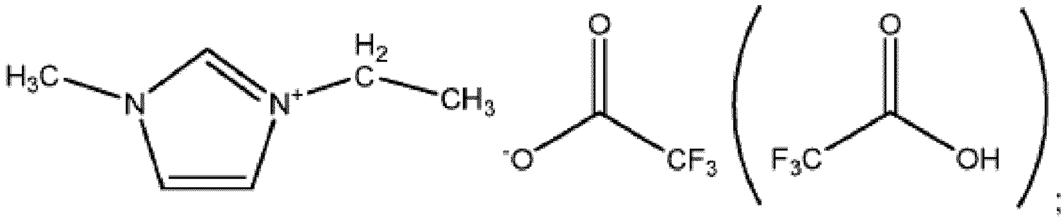

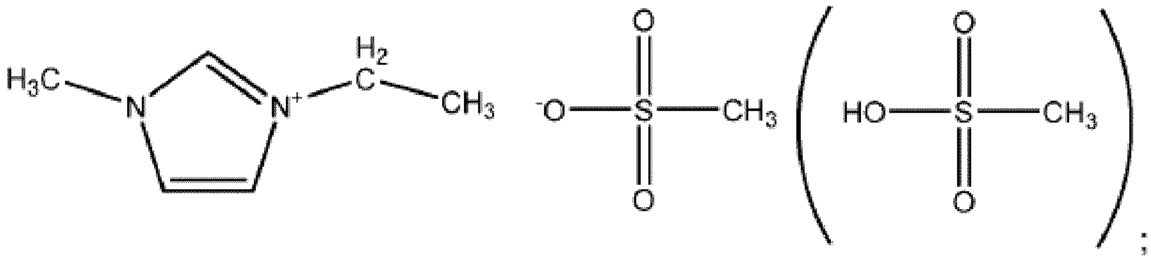

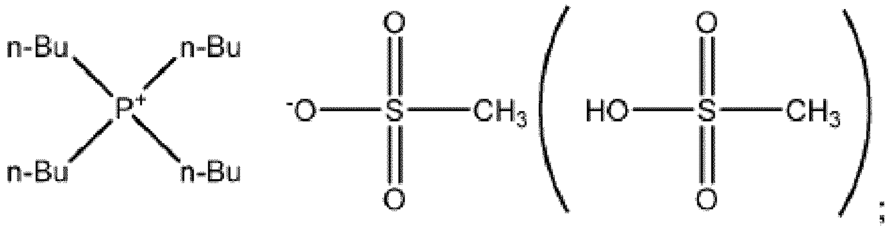

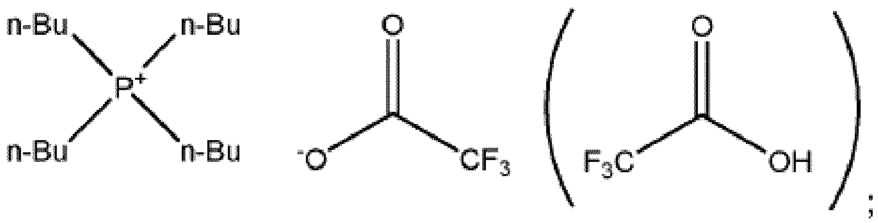

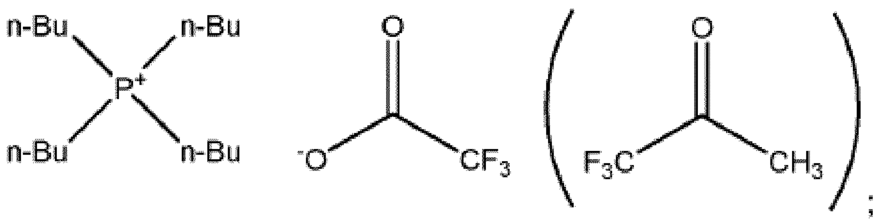

and

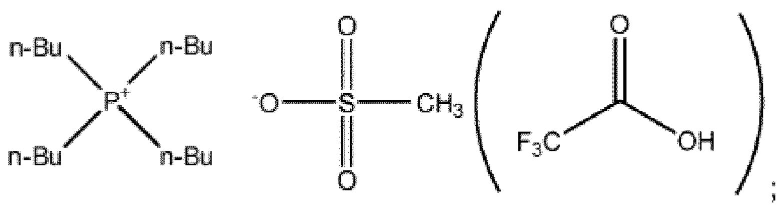

where n-Bu represents a normal-butyl group.

9. The method of any one of the preceding claims, where starting material C), a solvent, is present.

10. The method of claim 9, where the solvent is selected from the group consisting of aprotic solvents and trimethylsiloxy-terminated polydimethylsiloxanes.

11. The method of any one of the preceding claims, where step 1) is performed by heating at a temperature of 90°C to 130°C for at least 30 seconds, alternatively 30 seconds to 2 hours.

12. The method of any one of the preceding claims, where the method further comprises removing water during and/or after step 1).

13. The method of any one of the preceding claims, where the method further comprises heating starting material A) to a temperature of at least 100°C before step 1), thereby removing water.

14. The method of any one of the preceding claims, where step 2) is performed by a method comprising filtering, stripping and/or distilling the reaction mixture.

15. The method of any one of claims 1 to 5, where when B1) is B1i) the quaternary ammonium - fluorinated carboxylate complex, then B2) is the sulfonic acid.

16. The method of any one of claims 1 to 5, where when B1) is the quaternary ammonium - sulfonate complex, then B2) is the fluorinated carboxylic acid.

## Patentansprüche

1. Verfahren zum Polymerisieren von Polydiorganosiloxanen, umfassend:

 1) Erwärmen, bei einer Temperatur von 50 °C bis 150 °C, eines Reaktionsgemisches, hergestellt durch Mischen von Ausgangsmaterialien, umfassend

  A) ein Polydiorganosiloxan einer durchschnittlichen Einheitsformel $[(HO)R2SiO1/2]2(R2SiO2/2)_n$, wobei ein tiefgestelltes n 0 bis 2000 ist und jedes R eine unabhängig ausgewählte einwertige Kohlenwasserstoffgruppe mit 1 bis 18 Kohlenstoffatomen ist; und
  B) einen Katalysator in einer Konzentration von 0,001 bis 0,01 mol/L basierend auf einer Menge des Ausgangsmaterials A), wobei der Katalysator umfasst:

   B1) einen Komplex Salz - Anion, der aus der Gruppe ausgewählt ist, bestehend aus

    B1i) einem Komplex quartäres Ammonium - fluoriertes Carboxylat,
    B1ii) einem Komplex quartäres Ammonium - Sulfonat,
    B1iii) einem Komplex quartäres Phosphonium - fluoriertes Carboxylat,
    B1iv) einem Komplex quartäres Phosphonium - Sulfonat,
    B1v) einem Komplex Imidazolium - fluoriertes Carboxylat, und
    B1vi) einem Komplex Imidazolium - Sulfonat;

   B2) eine Säure, die aus der Gruppe ausgewählt ist, bestehend aus einer fluorierten Carbonsäure und einer Sulfonsäure; wobei dadurch ein Reaktionsgemisch hergestellt wird; wobei B2) in einer Menge von 1,5 Mol bis 10 Mol je Mol des Ausgangsmaterials B1) verwendet wird; und

 2) Zurückgewinnen eines Produkts aus dem Reaktionsgemisch, wobei das Produkt die Einheitsformel $[(HO)R2SiO1/2]2(R2SiO2/2)_m$ aufweist, wobei m > n.

2. Verfahren nach Anspruch 1, wobei jedes R unabhängig aus der Gruppe ausgewählt ist, bestehend aus Alkyl, Alkenyl und Aryl.

3. Verfahren nach Anspruch 1 oder 2, wobei das tiefgestellte n 10 bis 150 ist.

**4.** Verfahren nach einem der Ansprüche 1 bis 3, wobei das quartäre Ammonium in dem Ausgangsmaterial B1i) oder B1ii) Tetra-n-butylammonium ist; das quartäre Phosphonium in dem Ausgangsmaterial B1iii) oder B1iv) Tetra-n-butylphosphonium ist; und das Imidazolium in dem Ausgangsmaterial B1v) oder B1vi) Folgendes ist:

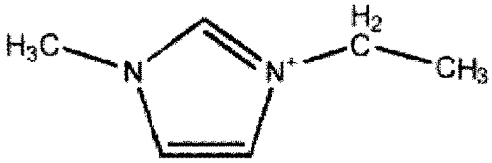

.

**5.** Verfahren nach einem der Ansprüche 1 bis 4, wobei das fluorierte Carboxylat

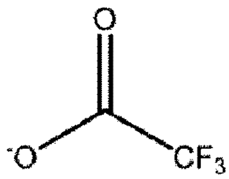

ist, und das Sulfonat

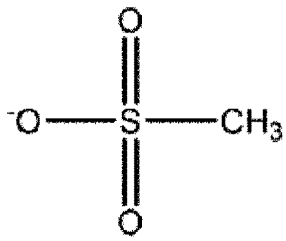

ist.

**6.** Verfahren nach einem der Ansprüche 1 bis 5, wobei die fluorierte Carbonsäure für das Ausgangsmaterial B2)

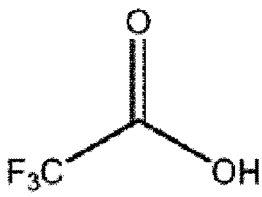

ist.

**7.** Verfahren nach einem der Ansprüche 1 bis 5, wobei die Sulfonsäure für das Ausgangsmaterial B2)

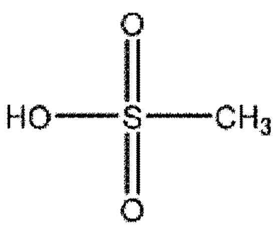

ist.

**8.** Verfahren nach einem der Ansprüche 1 bis 3, wobei B) der Katalysator aus der Gruppe ausgewählt ist, bestehend aus:

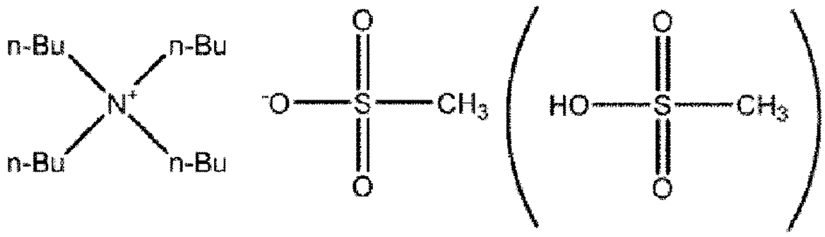
;

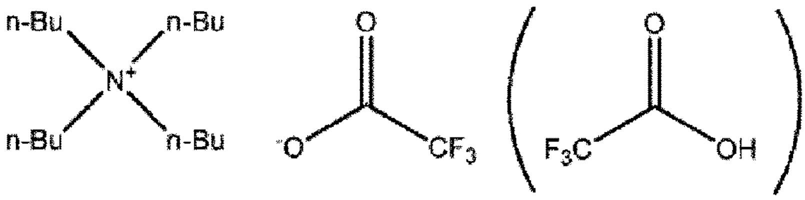
;

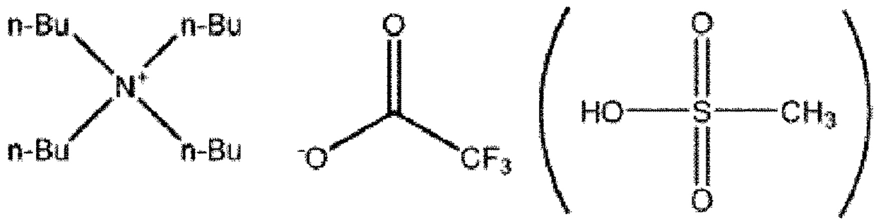
;

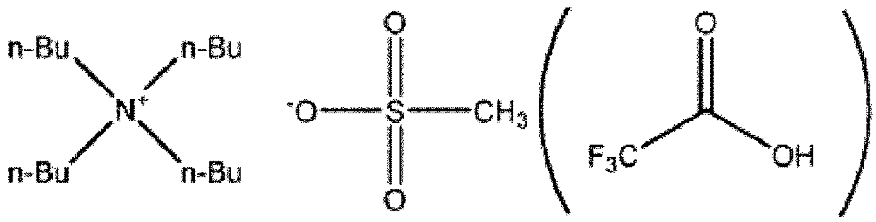
;

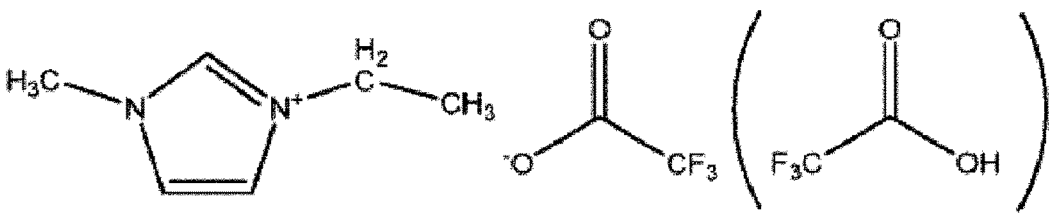
;

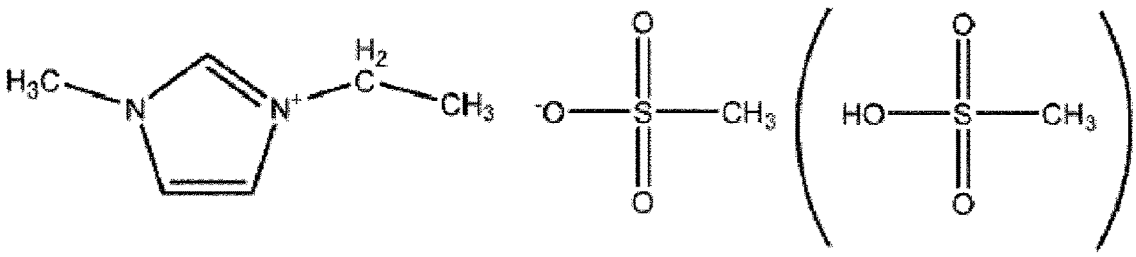
;

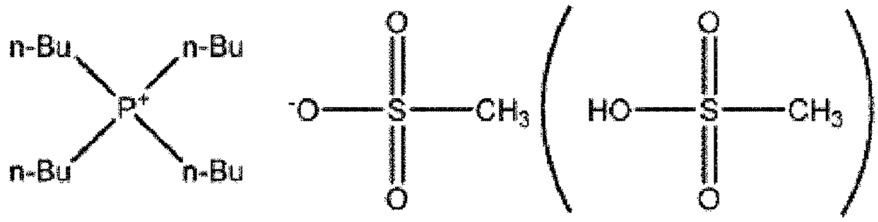

;

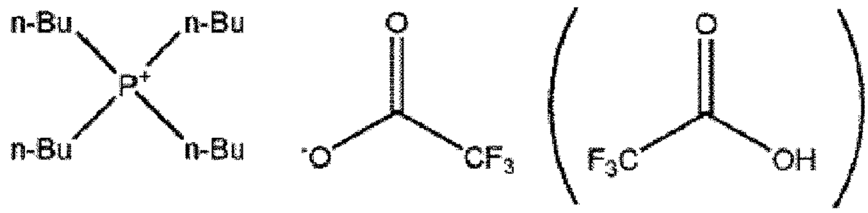

;

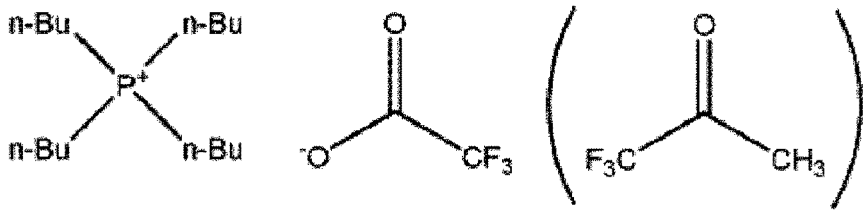

;

und

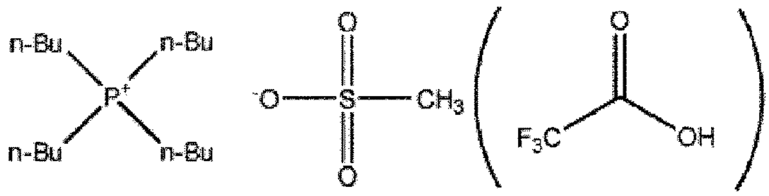

;

wobei n-Bu eine Normalbutylgruppe darstellt.

**9.** Verfahren nach einem der vorstehenden Ansprüche, wobei das Ausgangsmaterial C), ein Lösungsmittel, vorhanden ist.

**10.** Verfahren nach Anspruch 9, wobei das Lösungsmittel aus der Gruppe ausgewählt ist, bestehend aus aprotischen Lösungsmitteln und Polydimethylsiloxanen mit Trimethylsiloxy-Endgruppen.

**11.** Verfahren nach einem der vorstehenden Ansprüche, wobei Schritt 1) durch Erwärmen bei einer Temperatur von 90 °C bis 130 °C für mindestens 30 Sekunden, alternativ 30 Sekunden bis 2 Stunden, durchgeführt wird.

**12.** Verfahren nach einem der vorstehenden Ansprüche, wobei das Verfahren ferner ein Entfernen von Wasser während und/oder nach Schritt 1) umfasst.

**13.** Verfahren nach einem der vorstehenden Ansprüche, wobei das Verfahren ferner das Erwärmen des Ausgangsmaterials A) auf eine Temperatur von mindestens 100 °C vor Schritt 1) umfasst, wobei dadurch Wasser entfernt wird.

**14.** Verfahren nach einem der vorstehenden Ansprüche, wobei Schritt 2) durch ein Verfahren durchgeführt wird, umfassend Filtern, Strippen und/oder Destillieren des Reaktionsgemisches.

**15.** Verfahren nach einem der Ansprüche 1 bis 5, wobei, wenn B1) B1i) der Komplex quartäres Ammonium - fluoriertes

Carboxylat ist, dann B2) die Sulfonsäure ist.

**16.** Verfahren nach einem der Ansprüche 1 bis 5, wobei, wenn B1) der Komplex quartäres Ammonium - Sulfonat ist, dann B2) die fluorierte Carbonsäure ist.

**Revendications**

**1.** Procédé de polymérisation de polydiorganosiloxanes comprenant :

1) le chauffage, à une température de 50 °C à 150 °C, d'un mélange réactionnel préparé en mélangeant des matériaux de départ comprenant

A) un polydiorganosiloxane de formule unitaire moyenne [(HO)R2SiO1/2]2(R2SiO2/2)$_n$, où l'indice n va de 0 à 2000, et chaque R est un groupe hydrocarboné monovalent indépendamment choisi de 1 à 18 atomes de carbone ; et
B) un catalyseur, à une concentration de 0,001 à 0,01 mol/L sur la base de la quantité de matériau de départ A), où le catalyseur comprend

81) un complexe sel - anion choisi dans le groupe constitué de

B1i) un complexe ammonium quaternaire - carboxylate fluoré,
B1ii) un complexe ammonium quaternaire - sulfonate,
B1iii) un complexe phosphonium quaternaire - carboxylate fluoré,
B1iv) un complexe phosphonium quaternaire - sulfonate,
B1v) un complexe imidazolium - carboxylate fluoré, et
B1vi) un complexe imidazolium - sulfonate ;

B2) un acide choisi dans le groupe constitué d'un acide carboxylique fluoré et d'un acide sulfonique ; ce qui permet de préparer un mélange réactionnel ; où B2) est utilisé en une quantité de 1,5 mole à 10 moles par mole de matériau de départ B1) ; et

2) la récupération d'un produit à partir du mélange réactionnel, où le produit a la formule unitaire [(HO)R2SiO1/2]2(R2SiO2/2)$_m$, où m > n.

**2.** Procédé selon la revendication 1, où chaque R est indépendamment choisi dans le groupe constitué d'alkyle, d'alcényle et d'aryle.

**3.** Procédé selon la revendication 1 ou la revendication 2, où l'indice n va de 10 à 150.

**4.** Procédé selon l'une quelconque des revendications 1 à 3, où l'ammonium quaternaire dans le matériau de départ B1i) ou B1ii) est tétra-n-butylammonium ; le phosphonium quaternaire dans le matériau de départ B1iii) ou B1iv) est tétra-n-butylphosphonium ; et l'imidazolium dans le matériau de départ B1v) ou B1vi) est

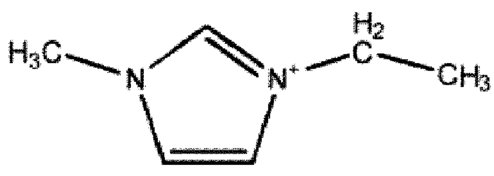

**5.** Procédé selon l'une quelconque des revendications 1 à 4, où le carboxylate fluoré est

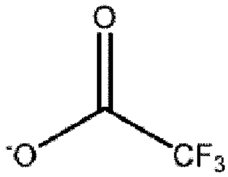,

et le sulfonate est

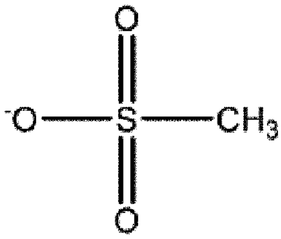.

6. Procédé selon l'une quelconque des revendications 1 à 5, où l'acide carboxylique fluoré pour le matériau de départ B2) est

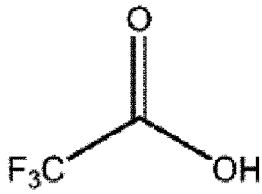.

7. Procédé selon l'une quelconque des revendications 1 à 5, où l'acide sulfonique pour le matériau de départ B2) est

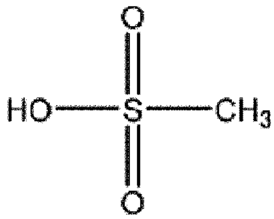.

8. Procédé selon l'une quelconque des revendications 1 à 3, où B) le catalyseur est choisi dans le groupe constitué de :

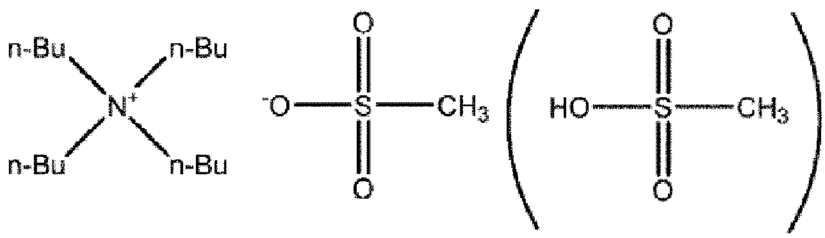

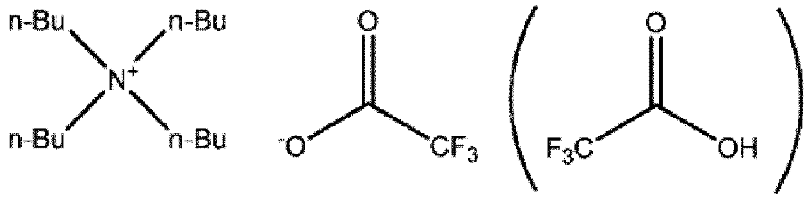

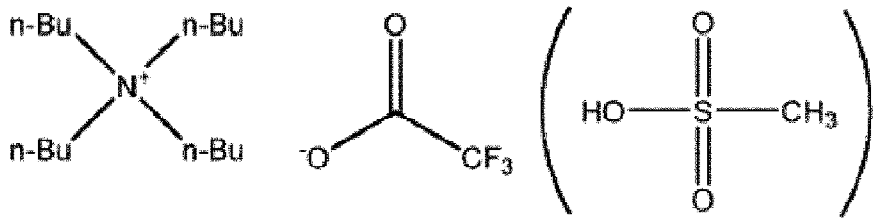

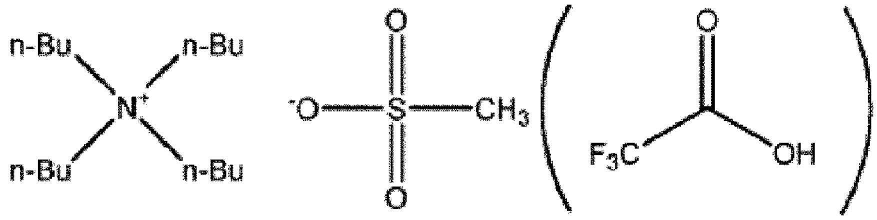

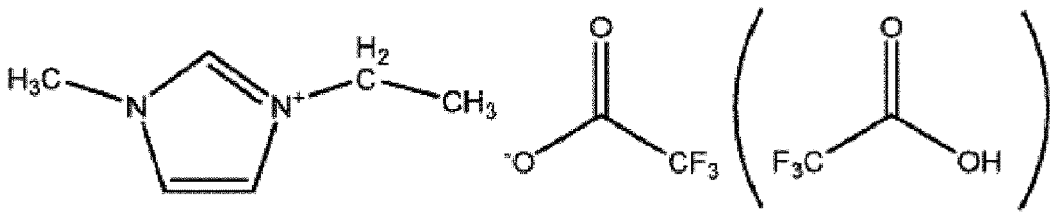

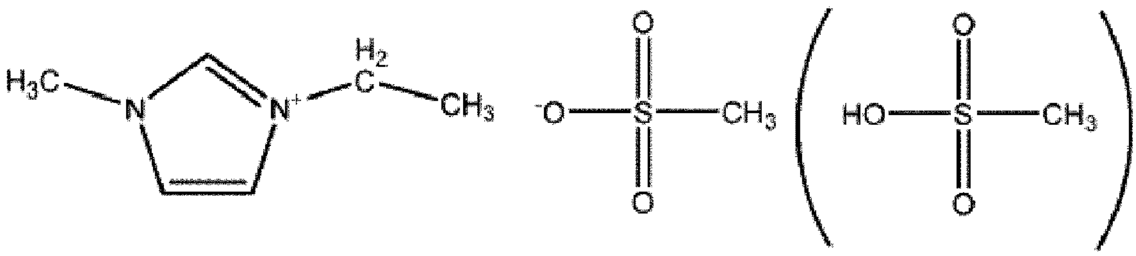

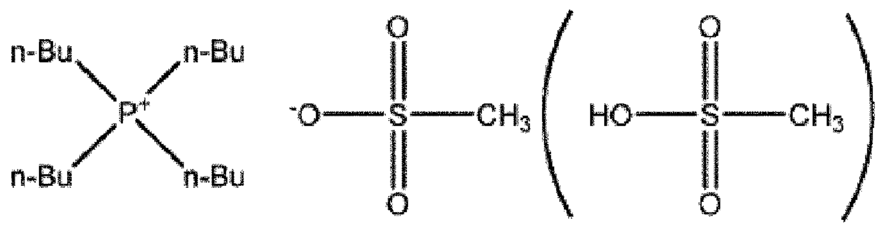

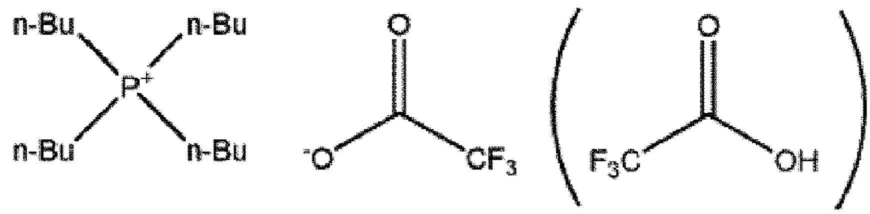

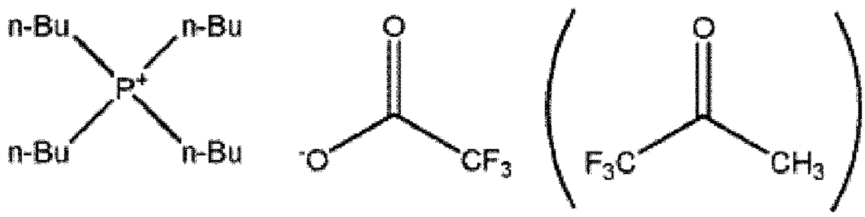
;

et

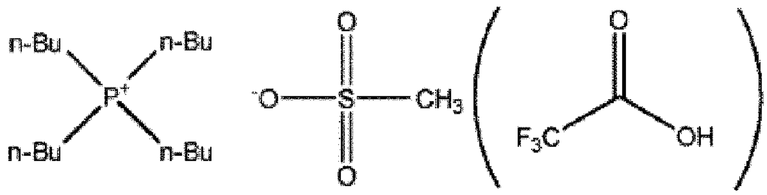
;

où n-Bu représente un groupe butyle normal.

**9.** Procédé selon l'une quelconque des revendications précédentes, où un matériau de départ C), un solvant, est présent.

**10.** Procédé selon la revendication 9, où le solvant est choisi dans le groupe constitué de solvants aprotiques et de polydiméthylsiloxanes à terminaison triméthylsiloxy.

**11.** Procédé selon l'une quelconque des revendications précédentes, où l'étape 1) est mise en oeuvre en chauffant à une température de 90 °C à 130 °C pendant au moins 30 secondes, en variante 30 secondes à 2 heures.

**12.** Procédé selon l'une quelconque des revendications précédentes, où le procédé comprend en outre l'élimination de l'eau pendant et/ou après l'étape 1).

**13.** Procédé selon l'une quelconque des revendications précédentes, où le procédé comprend en outre le chauffage du matériau de départ A) à une température d'au moins 100 °C avant l'étape 1), ce qui permet d'éliminer l'eau.

**14.** Procédé selon l'une quelconque des revendications précédentes, où l'étape 2) est mise en oeuvre par un procédé comprenant un filtrage, une épuration et/ou une distillation du mélange réactionnel.

**15.** Procédé selon l'une quelconque des revendications 1 à 5, où lorsque B1) est B1i) le complexe ammonium quaternaire - carboxylate fluoré, alors B2) est l'acide sulfonique.

**16.** Procédé selon l'une quelconque des revendications 1 à 5, où lorsque B1) est le complexe ammonium quaternaire - sulfonate, alors B2) est l'acide carboxylique fluoré.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2155804 B1


### Non-patent literature cited in the description


- **ROUNTREE, E. S. ; DEMPSEY, J. L.** *Inorg. Chem.,* 2016, vol. 55, 5079